# EUROPEAN PATENT APPLICATION

(11) **EP 2 709 413 A1**
(43) Date of publication of application: **19.03.2014**
(21) Application number: 13184311.2
(22) Date of filing: 13.09.2013
(51) Int. Cl.: H04W 72/08

(54) **Multicoordinating scheduling**

(30) Priority: 13.09.2012 GB 201216392
(71) Applicant: Vodafone IP Licensing Limited, The Connection Newbury Berkshire RG14 2FN (GB)
(72) Inventor: Lioulis, Nikolaos, Newbury, Berkshire RG14 2FN (GB); Law, Alan, Newbury, Berkshire RG14 2FN (GB); Dunkin, Andrew, Newbury, Berkshire RG14 2FN (GB)
(74) Representative: Ferrara, Simone

(57) **Abstract**

A scheduler for a cellular telecommunications network is provided having a first base station, the base station corresponding to a first cell, the scheduler being adapted to: identify a geographical location of a first mobile device connected to the base station; obtain resource usage information of mobile devices located in proximity to the first mobile device but connected to a second cell of the network; and, based on the geographical location of the first mobile device and the resource usage information, allocate resource blocks to the first mobile device. A base station and telecommunications network and associated method and computer readable storage medium are also provided.

## Description

### Background to the invention

In cellular telecommunications networks, data communications between multiple mobile devices and the network are typically coordinated by a scheduler, which is conventionally comprised within the base station of the access portion of the network. Generally, each base station corresponds to a cell of the network and serves a geographical area. The term "cell" refers to a region in which radio signals from a specific base station antenna dominate. Each data transmission is divided into a set of data blocks, or resource blocks, which are transmitted in both the downlink (DL) and uplink (UL) directions, that is, from or to the base station. The scheduler assigns at which time these blocks are transmitted and assigns a 'resource' to be used for the transmission. A resource is a frequency of available spectrum which is to be used for that transmission. Hence a resource block (RB) is a time period of a particular frequency or set of frequencies which is to be used for transmission of a portion of the data.

In order to avoid interference in neighbour cells of the network, it is known to employ inter-cell interference coordination (ICIC) to assign resource blocks to the mobile devices. As part of this coordination, those cells serving adjacent or overlapping geographical areas, will share information with each other to aid in serving those users who are situated at the edge of the geographical area covered by the cell, that is, those users which are likely to encounter interference from the use of resources by neighbouring cells. The available resource blocks are divided up between the two cells, such that the two cells assign sufficiently different resource blocks when serving users in proximity to each other. Thus, the risk of interference affecting transmissions for users in these locations is mitigated. ICIC is defined in various places in the 3GPP specifications, such as for example 3GPP TS36.423 which defines the interface between the cells.

As discussed above, it is known for cells to identify those users which may be located at the edge of a cell area and then allocate particular resource blocks based on this information and information shared with neighbouring cells, such that the allocation does not interfere with the transmissions of the neighbouring cell. However, this allocation is sub-optimal when the number of neighbouring or overlapping cells is increased, that is, the complexity of the network is increased.

These problems are particularly notable in Heterogeneous Networks (HetNets) although they are notable in conventional networks with a particular number of overlapping or neighbouring cells. HetNets are multi-layer networks with base stations of various sizes used to fill gaps in coverage and serve high use areas in order to increase user satisfaction and communication throughputs.

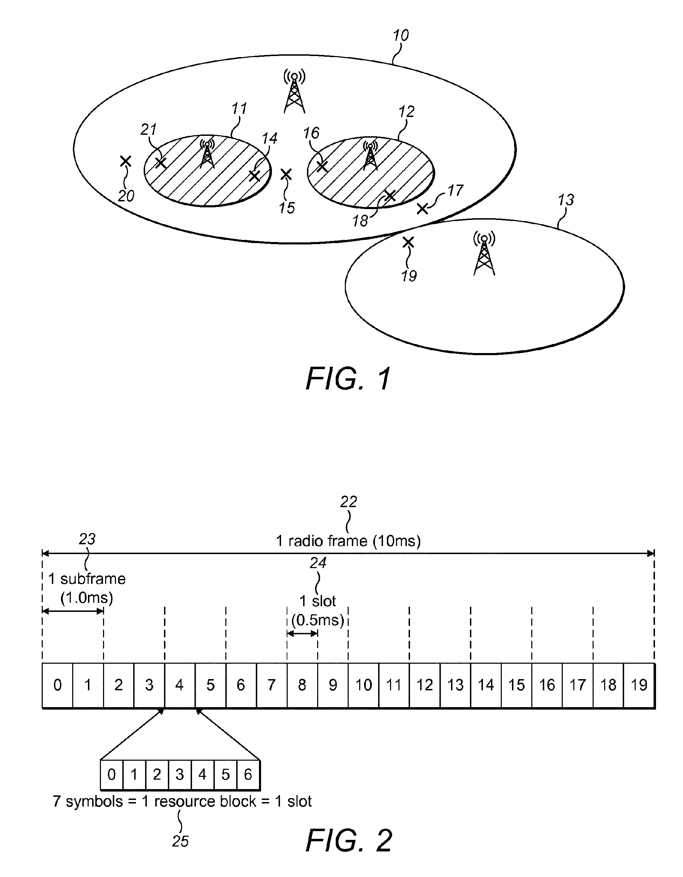

For example, consider the HetNet scenario illustrated in Figure 1 and assume that there are three available resource block ranges to be assigned to each user, named 1, 2, and 3 for simplicity. In this scenario, to avoid interference in the centre of the area, the three cells 10, 11 and 12 communicate with each other to dived up the three ranges. Cell 10 assigns range 1 to its centre cell users, cell 11 assigns range 2 to its cell edge users and cell 12 assigns range 3 to its cell edge users. In this way, the users located in the central area do not suffer any interference from the other transmissions to or from the other cells.

In order to avoid interference at the left side of the area, cell 10 must assign range 3 to its cell edge users since cell 11 has assigned cell range 2 to its cell edge users and cell 10 has already used range 1 for its centre cell users.

As a result of the above assignment, those users at the right hand side of the area, will unavoidably suffer from interference with the transmissions of those users at the edge of cell 12 since all users have been assigned range 2 as they are either located at the edge of cell 10 or the edge of cell 12. Moreover, the scheduler in cell 10 will need to attempt differentiate those users at the right hand side of the cell with those users at the cell edge of the neighbouring cell 13 in addition to the overlapping cells 11 and 12, significantly increasing the processing complexity.

The described scenario may be considered relatively complex; however simpler scenarios will also result in interference, even though the cells can communicate with each other to allocate a limited number of available resource blocks. The allocation of a particular resource block range for all cell edge users of a cell, although it may be beneficial in a very simple cell scenario, does not adequately reduce interference in scenarios with multiple neighbouring and/or overlapping cells resulting in sub-optimal cell throughput and the loss of valuable resource blocks in the transmission of data.

The present invention seeks to obviate or at least ameliorate the above drawbacks with known resource allocation using inter-cell interference coordination.

### Summary of the Invention

According to a first aspect of the present invention, there is provided a scheduler for a cellular telecommunications network having a first base station, the base station corresponding to a first cell, the scheduler being adapted to: identify a geographical location of a first mobile device; obtain resource usage information of mobile devices located in proximity to the first mobile device but connected to a second cell of the network; and, based on the geographical location of the first mobile device and the resource usage information, allocate resource blocks to the first mobile device.

By basing the allocation of the resource blocks to the first mobile device based on the specific location of the first mobile device in the cell area, in addition to, or instead of, whether or not the user equipment (UE) is positioned at the edge of the cell, the risk of resource block conflict is mitigated and the interference caused by mobile devices connected to other cells of the network is reduced.

The scheduler may be further adapted to identify if the first mobile device is located at the edge of the cell. Further, the step of identification of the geographical location of the first mobile device may be performed if the first mobile device is located at the edge of the cell. In this way, the processing power required by the scheduler is reduced and the calculation speed increased.

The scheduler may be further adapted to forward the allocation of resource blocks and the location of the first mobile device to a third cell. The allocation of resource blocks is then shared such that the neighbouring cells mobile devices can also reduce their interference risk. The third cell may or may not be different from the second cell.

The scheduler may be further adapted to provisionally allocate resource blocks to the first mobile device and forward the provisional allocation to the second cell of the network before the step of obtaining resource usage information. Thus, the report from the neighbouring cell can affect those cells that are conflicted both speeding up the processing time and also allowing the provisional allocation to be sent to other cells for conflict checks.

The identification of the geographical location of the first mobile device may include requesting Global Positioning System, GPS, values from the first mobile device. Accurate location information is therefore received.

The identification of the geographical location of the first mobile device may include identifying an indication of the path loss between the first mobile device and the first cell, and, the first mobile device and the second cell, wherein the geographical location is a location relative to the first cell and the second cell. The scheduler is therefore able to identify if mobile devices will be conflicted without detailed location information because it can be determined whether the UE being allocated resource blocks and the reported UE are in proximity or are on opposing sides of the cell and will not therefore interfere with each other.

The identification of the geographical location of the first mobile device may also include triangulating the location of the first mobile device from signals received by a plurality of base stations. The location information can be made more accurate in addition to location information being determinable where GPS information is not available.

The second cell may be a femtocell or, alternatively, the second cell may be a picocell. The scheduler is therefore suitable for Heterogeneous Networks. According to a second aspect of the present invention, there is provided a base station for a cellular telecommunications network, adapted to: identify those mobile devices connected to the base station which are located at the edge of the area covered by the base station; identify the geographical location of the mobile devices; allocate resource blocks to the mobile devices for any data waiting to be sent to or from the mobile devices; and, forward a report of resource block allocation and location information to a different network component.

According to a third aspect of the present invention, there is provided a telecommunications network comprising a base station according to the second aspect of the present invention and a scheduler according to the first aspect of the present invention.

According to a fourth aspect of the present invention, there is provided a method in a cellular telecommunications network for allocating resource blocks for data transmission to or from a first mobile device connected to a first base station, the first base station corresponding to a first cell, the method comprising: identifying the geographical location of the first mobile device; obtaining resource usage information of mobile devices located in proximity to the first mobile device but connected to a second cell of the network; and, based on the geographical location of the first mobile device and the resource usage information, allocating resource blocks to the first mobile device.

According to a fifth aspect of the present invention, there is provided a method in a cellular telecommunications network, the method comprising: identifying those mobile devices connected to a base station which are located at the edge of the area covered by the base station; identifying the geographical location of the mobile devices; allocating resource blocks to the mobile devices for any data waiting to be sent to or from the mobile devices; and, forwarding a report of resource block allocation and location information to a different network component.

### Brief Description of the Drawings

An example of the present invention will now be described in detail with reference to the accompanying drawings, in which:
Figure 1 shows a schematic illustration of an overview of a Heterogeneous Network;
Figure 2 shows a Frequency Division Duplex (FDD) radio frame;
Figure 3 shows a resource grid;
Figure 4 shows a schematic illustration of a base station in accordance with the present invention;
Figure 5 shows a flow diagram of a first example of the present invention;
Figure 6 shows a flow diagram of an exemplary sharing algorithm according to the first example the present invention;
Figure 7A shows a flow diagram of a second exemplary sharing algorithm according to the first example the present invention;
Figure 7B shows a further flow diagram of a second exemplary sharing algorithm according to the first example the present invention;
Figure 8 shows a schematic illustration of a common scheduler in accordance with a second example of the present invention; and,
Figure 9 shows a flow diagram of the second example of the present invention.

### Glossary

- 3GPP: Third Generation Partnership
- CEU: Cell Edge User
- CP: Cyclic Prefix
- CQI: Channel Quality Indicator
- CSG: Closed Subscriber Group
- eNB: evolved-Node B
- FDD: Frequency Division Duplex
- GPS: Global Positioning System
- GSM: Global System for Mobile Communications
- HETNET: Heterogeneous Network
- HII: High Interference Indicator
- HSDPA: High Speed Downlink Packet Access
- ICIC: Inter-cell Interference Coordination
- LTE: Long Term Evolution
- MCS: Modulation and Coding Scheme
- MS: Mobile Station
- OI: Overload Indicator
- PC: Personal Computer
- PRB: Physical Resource Block
- RB: Resource Block
- RNTP: Relative Narrowband Transmit Power
- TDD: Time Division Duplex
- TD-SCDMA: Time Division-Synchronous Code Division Multiple Access
- UE: User Equipment
- UMTS: Universal Mobile Telecommunications System
- WIMAX: Worldwide Interoperability for Microwave Access

### Detailed Description

In the following description, reference will be made to Global System for Mobile Communications (GSM), Universal Mobile Telecommunications System (UMTS), Long Term Evolution (LTE) and to particular standards. However it should be understood that the present disclosure is not intended to be limited to these. The present invention may also be applicable to a number of modes of transmission such as Time Division Duplex (TDD), Frequency Division Duplex (FDD), Time Division-Synchronous Code Division Multiple Access (TD-SCDMA), and High Speed Downlink Packet Access (HSDPA), among others.

While devices are often referred to as "mobile" in the description herein, the term "mobile" should not be construed to require that a device always be mobile, merely that it has the capability of being in communication with a wireless telecommunications network which allows mobility. For instance, a PC terminal or a machine to machine client that is never moved from a particular geographic location may in a sense still be considered mobile as it could be moved to a different location yet still access the same network. Where the term "mobile device" is used in the present discussion it is to be read as including the possibility of a device that is "semi-permanent" or even "fixed" where the context does not contradict such an interpretation.

Although throughout the following description the present invention is described in the context of an LTE network, it will be understood that the principles are equally applicable to other wireless data telecommunications networks such as GSM, UMTS, WIMAX, cdmaOne and its variants. Each specification and standard may define equivalent terms to those used herein such as Channel Quality Index (CQI) and Reference Signal Received Power (RSRP). For convenience, only the LTE specific terms are used throughout.

In a typical cellular radio telecommunications network, a wireless telecommunications device communicates via one or more radio access networks (RAN) to one or more core networks. The RAN includes a plurality of base stations (BS), each base station (BS) corresponding to a respective cell of the telecommunications network. The term cell refers to a region in which radio signals from a specific base station antenna dominate. The mobile devices may be handheld mobile telephones, personal digital assistants (PDAs), smartphones, tablet computers or laptop computers equipped with a data card among others. In a UMTS or LTE system, such devices are typically referred to as User Equipment (UE). In a GSM system, such devices are typically referred to as Mobile Stations (MS). In the description herein both terms may be used interchangeably; however it will be noted that the term UE will be used predominantly.

LTE (Long Term Evolution) is a next generation network technology created by the 3rd Generation Partnership Project (3GPP). It has been designed to deliver high data throughput to mobile users. In LTE, a scheduler is situated at the base station, i.e. the evolved-Node B (eNB), and is responsible for allocating transmission slots in the downlink (DL) and uplink (UL) directions to and from UEs. Throughout the description, the terms base station and eNB may be used interchangeably.

LTE uses orthogonal frequency division multiple access (OFDMA) for the downlink and single carrier frequency division multiple access (SC-FDMA) for the uplink. OFDMA is a multi-carrier scheme that allocates radio resources to multiple users. OFDMA uses orthogonal frequency division multiplexing (OFDM) which splits the carrier frequency bandwidth into many small sub-carriers spaced at 15kHz, and then modulates each individual sub-carrier using a digital modulation format. OFDMA assigns each user with the bandwidth needed for their transmission. Unassigned subcarriers are switched off, thus reducing power consumption and interference. Although OFDMA uses OFDM, multiple users are allowed to share the same bandwidth at each point in time. In SC-FDMA, data spreads across multiple sub-carriers, unlike OFDMA where each sub-carrier transports unique data.

One feature shared by LTE in both the DL and the UL is the generic frame structure, where transmissions are segmented into frames. The LTE specification defines both FDD and TDD modes of operation. LTE frames are typically 10ms in duration. Generally, frames consist of 20 slot periods of 0.5ms. Sub-frames contain two slot periods and are 1ms in duration. For transmission, users are allocated a specific number of sub-carriers for a pre-determined amount of time. These are referred to as physical resource blocks (PRBs) in the LTE specifications but may also be generally referred to as resource blocks (RBs). PRBs thus have both a time and frequency dimension.

The smallest modulation structure of LTE is a resource element. In FDD mode, a resource element is one 15kHz sub-carrier and one symbol. Resource elements aggregate into resource blocks. A resource block has dimensions of sub-carriers and symbols. 12 consecutive sub-carriers in the frequency domain and 6 or 7 symbols in the time domain form each resource block. The number of symbols depends on the cyclic prefix (CP) in use. When a normal CP is used, the resource block contains seven symbols. When an extended CP is used, the resource block contains six symbols since the CP will take up more space in the frame. A delay spread that exceeds the normal CP link indicates the use of extended CP.

The allocation of resource blocks is handled by a scheduling function at the base station. A resource block is the smallest element of resource allocation assigned by the base station scheduler. As stated above, the 10ms frame of LTE is divided into 10 sub-frames. Each sub-frame divides into two slots of 0.5ms. In the time domain, a slot is exactly one resource block long.

Figure 2 illustrates an exemplary FDD frame type. As shown, the frame is made up of a series of sub-frames, each sub-frame comprising two time slots. Each time slot is equivalent to a resource block.

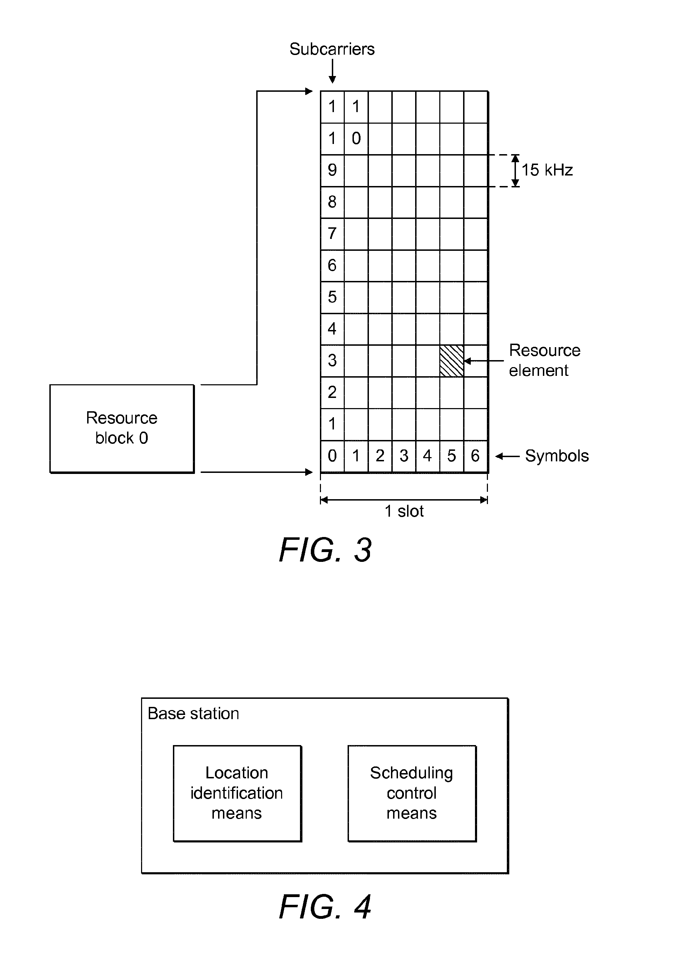

Figure 3 illustrates the relationship between a slot, symbols and resource blocks in the form of a resource grid. As shown, each resource block is made up of a set number of sub-carriers and symbols. A specific symbol and sub-carrier defines a resource element.

For the purposes of transmission, there are a limited number of resource blocks available which correspond to the amount of available bandwidth. In the DL direction, the number of available resource blocks is determined by the total available bandwidth, the bandwidth of each sub-carrier and, the total bandwidth of each resource block. For example, if the total available bandwidth is 20MHz, the sub-carrier bandwidth is 15kHz and there are 12 sub-carriers for each resource block giving a total resource block bandwidth of 180kHz; then the number of available resource blocks is 100. The LTE specification for the number of available PRBs for 1.25MHz to 20MHz is shown in the table below.

| | | | | | | |
|---|---|---|---|---|---|---|
| **Bandwidth (MHz)** | 1.25 | 2.5 | 5.0 | 10 | 15.0 | 20.0 |
| **Subcarrier bandwidth (kHz)** | 15 | | | | | |
| **PRB bandwidth (kHz)** | 180 | | | | | |
| **No. of available PRBs** | 6 | 12 | 25 | 50 | 75 | 100 |

In LTE, the scheduler of the eNB assigns the available bandwidth in terms of resource blocks for data transmission to each UE. The aim of the scheduler is to make best use of the available resources and to increase the transmission rates. As stated in the background section above, UEs positioned at the edge of a cell area will encounter interference from transmissions in neighbouring or overlapping cells. Interference is caused by a neighbouring cell using the same allocated resource at the same time as the UE is scheduled to transmit or receive in the serving cell. This problem can be summarised as: users that are from another part of the network, i.e. connected to a different cell than the cell in question, may cause interference with the UE if they are using the same or similar resource blocks at the time of transmission.

This interference problem is particularly notable in Heterogeneous Networks. Heterogeneous Networks (HetNets) help offload users onto small cells, thereby enabling higher quality of service to users with otherwise poor coverage. With HetNet deployment in the same spectrum, users can experience severe interference caused mainly by the overlapping nature of the small cell deployments. Typically, cells can be classified in terms of their transmission powers, antennae heights and the type of access mechanism provided to the users.

HetNets are commonly split up into macro cells, outdoor femtocells (this is referred as (e)Pico) or home eNBs, Microcells and relay nodes. A macro cell covers a large cell area providing service to all the users with a high transmission power. A femto cell or Pico cell (when it is outdoor) is a low power cell which is often installed in the home hence why it is sometimes referred to as a Home eNB. A femto cell may have a closed access list which means the cells are sometimes referred to as closed subscriber group (CSG) cells. A Microcell is an operator deployed cell with a lower transmission power than the macro cell, typically used to provide access in high use or poor coverage areas such as shopping centres or train stations. A relay node is a cell which is provided to improve coverage. A relay node will backhaul its traffic through a wireless link to a donor eNB.

The variety of cells that exist in a typical HetNet result in large interference as users move in and out of the coverage ranges of the different cells and transmit data to and from the cells.

The 3GPP have designed Specifications for Inter-cell Interference Coordination (ICIC) as a means for reducing inter-cell interference and improving throughput at cell edges. To provide for inter-cell coordination, the 3GPP standards body has defined the X2 interface. The X2 interface is an inter-base-station interface that enables adjacent base stations to exchange information on bands and sub-bands generating large interference in other cells and on bands or sub-bands that are affected by large interference from other cells.

For ICIC it is defined in the standards that there are a set of interference coordination signals that can be used for implementing ICIC in both the downlink and uplink directions. The signals include relative narrowband transmit power (RNTP), high interference indicator (HII) and interference overload indicator (OI).

In the downlink direction, the RNTP message is used. RNTP is signalled using a bitmap where each RNTP bit value indicates whether the corresponding resource block pair is limited by a transmit power threshold or not. Upon receipt of the RNTP message, the recipient eNBs can take into account this information while determining their scheduling decision for subsequent subframes. For example, the recipient eNB may avoid scheduling UEs in resource blocks where the source eNB is transmitting above a certain power limit. The RNTP signals take the value of zero or one and is sent to multiple base stations serving adjacent cells for each resource block. As described above, a resource block is a unit of allocation in the frequency domain having a specific bandwidth. Specifically, the RNTP value is set to zero if the ratio between the transmit power of the DL signal allocated to the resource block and the average transmit power of the system frequency band is guaranteed to be under a certain threshold and is otherwise set to one. The base station thus learns about a resource block that may be transmitting at high power in an adjacent cell and therefore reduces interference by avoiding allocating that resource block to a user experiencing poor reception.

In the uplink direction, HII and OI are used. HII is used by a base station to notify to multiple base stations serving adjacent cells of the uplink RB that it has allocated to a cell-edge user. The HII is proactive indicator sent as a bitmap with one bit per resource block that the serving cell intends to use for scheduling cell-edge UEs potentially causing high inter-cell interference. This enables cell-edge users in adjacent cells to be allocated different bands. This is similar to the downlink approach, which means that improved throughput can be expected for these cell-edge users.

The OI signal is used by a base station to notify multiple base stations serving adjacent cells of the results of measuring interference power for each resource block and classifying those results into multiple levels. The OI is a reactive indicator exchanged over the X2 interface reflecting the uplink interference plus noise level of a resource block measured by an eNB. The base station of a cell that receives notification of high interference power from an adjacent cell can reduce the transmit power of its user and thereby reduce the amount of interference created in the adjacent cell.

Based on the above resource usage information received on the resource blocks that will be used by the cell-edge users, that is the UEs positioned at the edge of the serving cell, the eNB is operable to decide how to allocate the resource blocks to its cell edge users as well as to the other users of the cell.

In order to identify those users positioned at the edge of the cell, the UE typically uses two indicators. These are the CQI sent by the device to the base station and an indication of the path loss of data transmissions. The base station assumes that those UEs with high path loss and a low CQI, and therefore have a low channel quality, are positioned at the edge of the cell. The base station does not care or indeed know, the exact location of the UE within the cell merely that it is likely to be a cell edge user because the channel quality is low and it is suffering from a high amount of interference.

The CQI is a report which has been sent from the device and indicates the state of the radio channel. The CQI is a recommendation from the device about which modulation and coding scheme (MCS) a scheduler should allocate to that device, based on the latter's estimate of current radio conditions. Device CQI reports can be wideband, in which case the value represents a value of the radio conditions over all sub-bands, or they can be narrow band; that is, specific to a particular sub-band. Examples of the CQI reports sent by the devices are outlined in 3GPP TS 36.213 specification v 9.3.0. The CQI corresponds to the signal to interference plus noise ratio (SINR).

Each eNB transmits detectable symbols, known as reference signals, with a known transmission and power. The received power on these reference signals is a standard measurement made by the UE, known as the reference signal received power (RSRP). The RSRP is signalled to the affiliated eNB. The RSRP signals can be used to estimate path loss and hence the distance of the UE from each cell. The eNB can then determine that the UE is likely to be at the edge of the cell and can therefore be classified as a cell edge user.

Once the base station has determined a list of cell edge users, it can then use this information, together with the resource usage information received from the adjacent cells, that is the HII, OI and RNTP, in order to allocate resource blocks to the cell edge users.

Referring back to Figure 1, we can now see that the diagram indicates two macro cells and two picocells, or Microcells, which are positioned within the coverage area of the first macro cell 10. For the purposes of this example, 20 MHz of bandwidth is used corresponding to 100 RBs (and 10MHz corresponds to 50 RBs). In order to avoid interference at the centre of the cell, the cell edge users 14 of the pico/femtocell 11 will use a specific resource block range, which we will assume here is 33 to 66 (of the available 100). i.e. The resource blocks are split into 3 groups in this example and allocated accordingly.

The macro cell 10 will use resource blocks 67 to 99 in the centre of the cell for its users 15 and those cell edge users 16 in pico/femtocell 12 will use 0 to 32. At the left hand side of macro cell 10, the cell edge users 20 can therefore be either allocated 33 to 66 or 0 to 32. If they are allocated the 33 to 66 resource block range, then the resource blocks will interfere with the allocation of the pico/femtocell 11 to its cell edge users 21. At the right hand side of pico/femtocell 12, the cell edge users 18 will be using the resource block allocation of 0 to 32. Therefore, if either the users 19 at the edge of macro cell 13 or the users 17 at the edge of macro cell 10 use this range then there will be interference. Using the current cell edge user allocation method, it is not possible to allocate resource blocks to all of the users within the scenario without significant resource block interference.

As described above, a UE may suffer from interference caused from other parts of the network. If the base station limits all the cell edge users into a specific range of resource blocks, this may not provide the solution to the problem as the allocation may not be efficient for all cell edge users. In order to provide an efficient scheduling mechanism, there needs to be a specific differentiation for the cell edge users based on each one's situation. Thus, in accordance with the present invention, the scheduling algorithm when inter-cell interference coordination is used, needs to take into account the specific location of the cell edge users and any interference that might be damaging for that user.

In a first example of the present invention, the eNB will receive the HII, OI and RNTP from the neighbouring base station which may be a macro cell, or another cell as part of a heterogeneous network. These reports will include information on the location of the cell edge UEs and the resource blocks that they are scheduled to use. The eNB, after receiving this information, will check the location of its cell edge users and based on the specific case and location of that UE will appropriately allocate resource blocks to that UE.

As shown in Figure 4, the base station may comprise a location identification means and a scheduling control means. A location identification means may be operable to determine the specific location in the cell area of the UE to be allocated resource blocks. Various location identification means are envisaged, which will be described in more detail below. The scheduling control means is operative to appropriately allocate resource blocks to the users of the cell using processing capability to identify which cell edge users need to avoid which resource blocks based on information shared between the adjacent base stations.

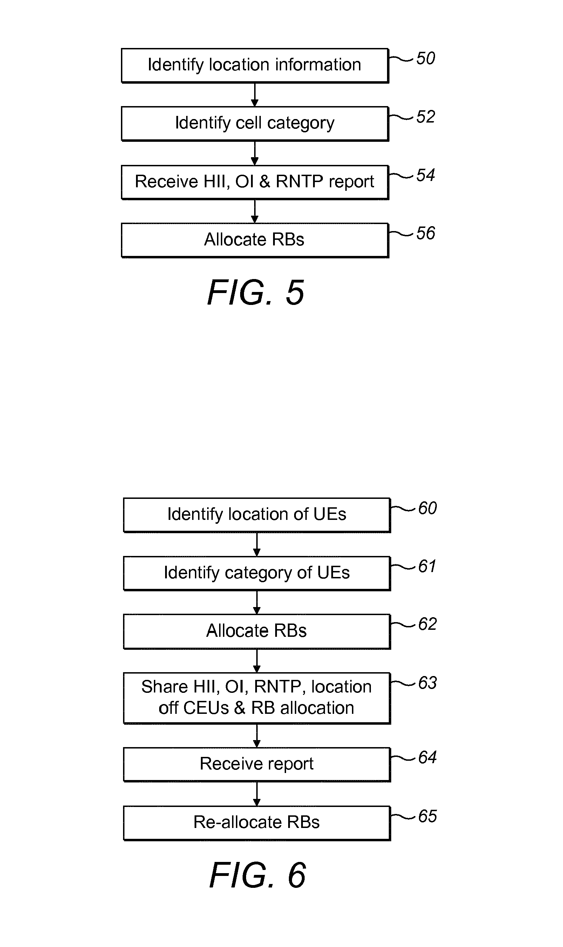

Figure 5 illustrates a flow diagram of the present example. At step 50, the base station will first identify the specific location of the UE. At step 52, the base station will identify the category of the UE based on path loss measurements together with a CQI report in the known manner. By category, it is meant whether the UE is a cell edge user, or a centre cell user, etc. At step 54, the base station will receive the HII, OI and RNTP reports that provide information around the resource blocks that will be used by adjacent base stations. The above steps can be performed in any order.

Based on the location of the UEs, and the report received from adjacent base stations, the base station is then operable to allocate resource blocks to all the UEs of the cell, step 56, and, in particular, to allocate resource blocks to those UEs at the edge of the cell which may encounter interference from the adjacent cells in order to avoid the resource blocks that may cause interference.

Various algorithms are contemplated for sharing location and resource usage information between the base stations and allocating resource blocks based on this shared knowledge. Two specific algorithms will now be described but it will be of course understood that other known algorithms may be used for sharing information and performing actions based on the shared information. In accordance with a exemplary algorithm, a base station will first carry out a provisional allocation of the available resource blocks and then share this provisional allocation with adjacent base stations. Any conflicting resource block allocations can then be amended.

In a further exemplary algorithm, the base stations may operate in a master/slave relationship or in a chain-type relationship where one base station will allocate its available resource blocks to its users and then pass this allocation on to one or more adjacent base stations. The adjacent base station(s) will then allocate its resource blocks based on the shared information so that conflicts are avoided.

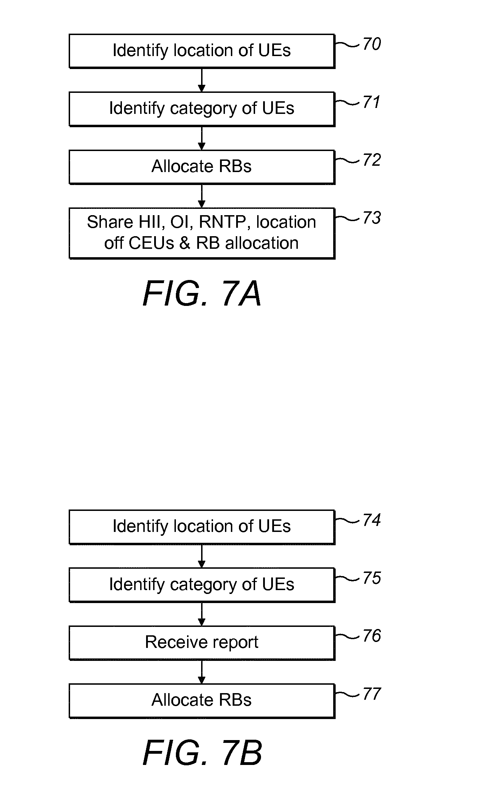

The two algorithms described above are depicted in Figures 6 and 7. As will be clear, the specific algorithm used to allocate the resource blocks once the information has been shared is not important here. The principle of this first example of the present invention is that location information is used by the base station in order to appropriately allocate the resource blocks to the UE served by the base station using processing capability to identify which users need to avoid which resource blocks to reduce the risk of interference. Any suitable coordination algorithm may be used.

In the first example algorithm described above, and illustrated in Figure 6, the base station will first identify the location of the UEs served by the cell at step 60. The base station will then identify the category of the UEs, that is, whether or not they are cell edge users, at step 61. At step 62, the base station will allocate a provisional set of resource blocks to the UE served by the cell. These steps may be performed in any order.

Next, at step 63, the UE will share this provisional allocation as well as the location of the cell edge users and the HII, OI and RNTP with the adjacent cells. The base station will receive a similar report from the adjacent base stations, shown at step 64. Based on the received report and the provisional allocation, the base station will reallocate the resource blocks in order to remove any resource block allocation that may suffer from interference from a user positioned in proximity to the UE served by the cell.

As stated above, the base stations may operate in a master/slave relationship or in a chain-type relationship in order to allocate the resource blocks based on the location information. As shown in Figure 7A, a first base station may identify the location of the UEs, at step 70, it may identify the category of the UEs, at step 71, and allocate resource blocks to these UEs, at step 72. As above, these steps may be performed in any order.

At step 73, the outcome of the previous three steps may be produced into a report which can be shared with an adjacent base station. The job of the first base station may now be complete, as in this algorithm, it is left to the adjacent base station to allocate its own resource blocks in order to avoid conflict.

The steps carried out by the second base station are illustrated in Figure 7B. At steps 74 and step 75, the base station will identify the location of the UEs and the category of them, i.e. CEU or non-CEU. At step 76, the base station will receive a report from the adjacent base station which carried out the steps of Figures 7A. These three steps may be carried out in any order.

Based on the outcome of the previous three steps, at step 77, the base station is operable to allocate resource blocks to the UEs for data transmission such that conflict with the resource blocks allocated by the adjacent base station is avoided. In this way, the risk of unnecessary interference is mitigated.

The algorithms described above are of course simplified for the purposes of illustration but they are indicative of potential algorithms that may be used to determine the resource block allocation based on the location information.

As stated above, a variety of methods are envisaged for determining the location of a UE served by the base station. In a first exemplary method, the location may be the relative location of the UE compared to the base station and an adjacent base station. For example, the path loss indication described above may be determined for two base stations and, based on this, the base station can determine whether or not the UE is positioned between the two base stations or at the other end of the cell. If the UE is located at the other end of the cell to the adjacent base station in question, the UE can be ignored for the purposes of conflict resolution as it will not suffer from interference caused by other UEs located between the two base stations.

In a further exemplary method, the base station may be operative to determine the location of the UE based on triangulation. For example, an analysis of communications with a plurality of base stations may result in the specific location of the UE being determined. If each base station knows its specific location through GPS, by triangulation, the specific location of the UE can be determined.

In a further exemplary method, the base station may be operable to request that the UE transmits its location in the form of a GPS signal. The UE may determine its location by using its GPS upon request and transmit the resulting values to the base station for use in location determination. To reduce processing requirements, the base station may be subsequently operable to assume that the GPS value is valid for a pre-determined amount of time or, alternatively, the base station may be operable to determine that, based on the frequency and speed of movement of the UE, that the UE has moved to a second location and determine the location from the original GPS value.

In a further exemplary methods, the base station may be operative to determine the location of the UE based on the angle of arrival of the signal.

The above methods of determining location may be used in isolation or in combination. A combination may be beneficial since it may be increase the accuracy of the measurement or alternatively it may be to reduce processing requirements. One method may be used in preference to another, for example, the GPS method may be used if available and another method used if it is not. Any other method of determining the location of the UE may be used with the present invention.

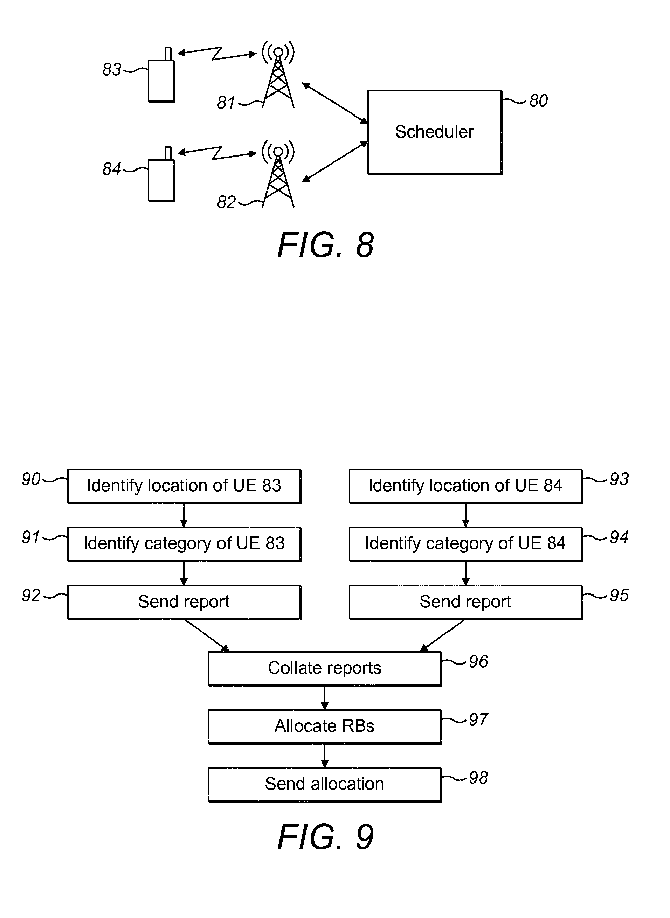

A second example of the present invention will now be described in which the scheduling control mechanism is positioned in a separate network entity to the base station. This is schematically represented in Figure 8. As shown, a scheduler 80, is positioned externally to base stations 81 and 82 and is common to both. The base stations 81 and 82 cooperate with the UEs 83 and 84, respectively, which are positioned within the cell area and are served by that cell. The common scheduler 80, receives information from the base stations in order to make a central allocation decision of the resource blocks that should be assigned for transmission to or from each UE 83 and 84.

Figure 9 illustrates how this common scheduler may be implemented, in the form of a flow diagram. At step 90, the base station, or potentially the shared common scheduler, will identify the location of the UE 83. At step 91, the category of UE will be identified. If the base station performs these steps, then a report will be sent to the scheduler, at step 92. The report may also include HII, OI and RNTP information. Corresponding steps 93, 94 and 95 would be performed by the adjacent base station.

The common scheduler 80 will then collate the reports, at step 96, and then allocate the resource blocks based on the information it has collated on the location of the UEs within each cell and the HII, OI and RNTP reports. The allocation will be sent to the base stations by the common scheduler, at step 98, to handle the subsequent data transmission to or from the UE 83 and 84.

In this way, the first and second examples of the present invention described above provide a scheduler in which the location of each cell edge user is used to determine the resource blocks allocated for data transmission such that interference with users connected to adjacent cells does not cause the loss of valuable data blocks.

## Claims

1. A scheduler for a cellular telecommunications network having a first base station, the base station corresponding to a first cell, the scheduler being adapted to:
identify a geographical location of a first mobile device connected to the base station;
obtain resource usage information of mobile devices located in proximity to the first mobile device but connected to a second cell of the network; and,
based on the geographical location of the first mobile device and the resource usage information, allocate resource blocks to the first mobile device.

2. A scheduler according to claim 1, in which the scheduler is further adapted to identify if the first mobile device is located at the edge of the cell.

3. A scheduler according to claim 2, in which the scheduler is adapted to perform the identification of the geographical location of the first mobile device if the first mobile device is located at the edge of the cell.

4. A scheduler according to any preceding claim, in which the scheduler is further adapted to forward the allocation of resource blocks and the location of the first mobile device to a third cell.

5. A scheduler according to any preceding claim, in which the scheduler is further adapted to provisionally allocate resource blocks to the first mobile device and forward the provisional allocation to the second cell of the network before the step of obtaining resource usage information.

6. A scheduler according to any preceding claim, in which the scheduler is adapted to identify the geographical location of the first mobile device by:
requesting Global Positioning System, GPS, values from the first mobile device; or
identifying an indication of the path loss between the first mobile device and the first cell, and, the first mobile device and the second cell, wherein the geographical location is a location relative to the first cell and the second cell; or
triangulating the location of the first mobile device from signals received by a plurality of base stations.

7. A scheduler according to any preceding claim, in which the second cell is a femtocell or a picocell.

8. A method in a cellular telecommunications network for allocating resource blocks for data transmission to or from a first mobile device connected to a first base station, the first base station corresponding to a first cell, the method comprising:
identifying the geographical location of the first mobile device;
obtaining resource usage information of mobile devices located in proximity to the first mobile device but connected to a second cell of the network; and,
based on the geographical location of the first mobile device and the resource usage information, allocating resource blocks to the first mobile device.

9. A method according to claim 8, further comprising identifying if the first mobile device is located at the edge of the cell.

10. A method according to claim 9, in which the step of identifying the geographical location of the first mobile device is performed if the first mobile device is located at the edge of the cell.

11. A method according to any of claims 8 to 10, further comprising forwarding the allocation of resource blocks and the location of the first mobile device to a third cell.

12. A method according to any of claims 8 or 11, further comprising provisionally allocating resource blocks to the first mobile device and forwarding the provisional allocation to the second cell of the network before the step of obtaining resource usage information.

13. A method according to any of claims 8 to 12, in which the step of identifying the geographical location of the first mobile device includes one of:
requesting Global Positioning System, GPS, values from the first mobile device;
identifying an indication of the path loss between the first mobile device and the first cell, and, the first mobile device and the second cell, wherein the geographical location is a location relative to the first cell and the second cell; or
triangulating the location of the first mobile device from signals received by a plurality of base stations.

14. A method according to any of claims 8 to 13, in which the second cell is a femtocell or a picocell.

15. A computer-readable storage medium having stored thereon instructions which can be executed to perform the method of any of claims 8 to 14.
